# EUROPEAN PATENT APPLICATION

(11) **EP 4 648 256 A1**
(43) Date of publication of application: **12.11.2025**
(21) Application number: 24875725.4
(22) Date of filing: 16.04.2024
(51) Int. Cl.: H02J 9/06

(54) **CONTROL METHOD AND SYSTEM FOR AUTOMATIC SWITCHING AND ENERGY OUTPUT OF AUXILIARY POWER SUPPLY**

(30) Priority: 11.03.2024 CN 202410275255
(71) Applicant: Sineng Electric Co., Ltd., Wuxi, Jiangsu 214174 (CN); Suzhou Qiancheng New Energy Technology Co., Ltd., Suzhou, Jiangsu 215101 (CN)
(72) Inventor: DING, Jiajie, Wuxi, Jiangsu 214174 (CN); LIU, Baodong, Wuxi, Jiangsu 214174 (CN)
(74) Representative: Bayramoglu et al.
(86) International application number: PCT/CN2024/088007
(87) International publication number: WO 2025/189524

(57) **Abstract**

This application relates to the field of power supply control technologies, and provides a control method and system for automatic switching and energy output of an auxiliary power supply. The method includes: reading an enable state of an auxiliary power supply, where the enable state of the auxiliary power supply includes an on state and an off state; determining that a manual access mode or an ATS automatic control signal is an auxiliary power supply switching signal when the enable state of the auxiliary power supply is the on state; reading a power output state of a primary power supply, where the power output state of the primary power supply includes a normal output state and an abnormal output state; and executing a start/stop control instruction on the auxiliary power supply by using the manual access mode or the ATS automatic control signal when the power output state of the primary power supply is the abnormal output state. This application can resolve risk problems such as system downtime, shutdown, and a plurality of error alarms that may occur when a manual operation is inconvenient or not in time, and can provide a system with a capability of automatically switching between a primary power supply and an auxiliary power supply.

## Description

This application claims priority to Chinese Patent Application No. 202410275255.2, filed with the China National Intellectual Property Administration on March 11, 2024 and entitled "CONTROL METHOD AND SYSTEM FOR AUTOMATIC SWITCHING AND ENERGY OUTPUT OF AUXILIARY POWER SUPPLY", which is incorporated herein by reference in its entirety.

### TECHNICAL FIELD

This application relates to the field of power supply control technologies, and in particular, to a control method and system for automatic switching and energy output of an auxiliary power supply.

### BACKGROUND

As energy supply manners increase, a requirement of an energy storage inverter for different power supply manners is also increasing. A power grid side/alternating-current side has no equipped auxiliary power supply. After a power grid is disconnected, only PV and a battery can be used to supply power to an EPS (emergency load) or a household load on the alternating-current side. After the PV and the battery are unavailable, the ESP cannot be supplied with power, and energy cannot be continuously provided to a user. After the power grid is disconnected, original user settings are affected, and some energy scheduling functions required by the user may fail. The power grid side/alternating-current side has a function of being equipped with an auxiliary power supply for switching to, but a separate mode needs to be specified in software function settings. The operation is inconvenient or not in time, and the user needs to set the mode separately. Therefore, a control method for an auxiliary power supply is urgently needed to resolve problems of unnecessary system downtime, shutdown, and a plurality of error alarms that may occur when a manual operation is inconvenient or not in time.

### SUMMARY

This application provides a control method for automatic switching and energy output of an auxiliary power supply, to resolve problems of unnecessary system downtime, shutdown, and a plurality of error alarms that may occur when a manual operation is inconvenient or not in time.

According to a first aspect, this application provides a control method for automatic switching and energy output of an auxiliary power supply, where the method includes the following steps:
reading an enable state of an auxiliary power supply, where the enable state of the auxiliary power supply includes an on state and an off state;
determining that a manual access mode or an ATS automatic control signal is an auxiliary power supply switching signal when the enable state of the auxiliary power supply is the on state;
reading a power output state of a primary power supply, where the power output state of the primary power supply includes a normal output state and an abnormal output state; and
executing a start/stop control instruction on the auxiliary power supply by using the manual access mode or the ATS automatic control signal when the power output state of the primary power supply is the abnormal output state.

Optionally, before the step of determining that a manual access mode or an ATS automatic control signal is an auxiliary power supply switching signal when the enable state of the auxiliary power supply is the on state, the method further includes:
determining, based on the enable state of the auxiliary power supply, whether the manual access mode or the ATS automatic control signal is the auxiliary power supply switching signal; and
determining that the manual access mode or the ATS automatic control signal is the auxiliary power supply switching signal when the enable state of the auxiliary power supply is the on state.

Optionally, before the step of executing a start/stop control instruction on the auxiliary power supply by using the manual access mode or the ATS automatic control signal when the power output state of the primary power supply is the abnormal output state, the method further includes:
determining, based on the power output state of the primary power supply, whether the manual access mode or the ATS automatic control signal is enabled at an auxiliary power supply output start/stop control port; and
when the power output state of the primary power supply is the abnormal output state, determining that the auxiliary power supply output start/stop control port uses the manual access mode or the ATS automatic control signal as one of signals for starting the auxiliary power supply.

Optionally, the step of executing a start/stop control instruction on the auxiliary power supply by using the manual access mode or the ATS automatic control signal when the power output state of the primary power supply is the abnormal output state includes:
executing a start instruction on the auxiliary power supply by using the manual access mode or the ATS automatic control signal if the power output state of the primary power supply is the abnormal output state;
receiving, by the auxiliary power supply, the start instruction, enabling zero-power output, and maintaining output of the auxiliary power supply output start/stop control port;
when power output of the primary power supply is restored to normal, executing a stop instruction on the auxiliary power supply by using the manual access mode or the ATS automatic control signal; and
receiving, by the auxiliary power supply, the stop instruction, and releasing zero-power output control of a generator, where the auxiliary power supply output start/stop control port outputs a disable signal.

Optionally, after the step of executing a start instruction on the auxiliary power supply by using the manual access mode or the ATS automatic control signal if the power output state of the primary power supply is the abnormal output state, the method further includes:
receiving, by the auxiliary power supply, the start instruction, and if the auxiliary power supply is not started, starting a signal count, and determining whether the signal count is within a preset quantity of times; and
re-executing the start instruction on the auxiliary power supply by using the manual access mode or the ATS automatic control signal if the signal count is within the preset quantity of times.

Optionally, after the step of re-executing the start instruction on the auxiliary power supply by using the manual access mode or the ATS automatic control signal if the signal count is within the preset quantity of times, the method further includes:
when an auxiliary power supply interval delay is enabled, stopping starting the auxiliary power supply and outputting an error.

According to a second aspect, this application further provides a control system for automatic switching and energy output of an auxiliary power supply. The control system for automatic switching and energy output of an auxiliary power supply is configured to perform the control method for automatic switching and energy output of an auxiliary power supply provided in the embodiments of this application.

According to a third aspect, this application further provides a real-time operating system for an embedded computer in a hybrid energy storage inverter. The system includes a hardware computer platform and a control system for an auxiliary power supply, and the hardware computer platform is provided with an energy management system. The control system for automatic switching and energy output of an auxiliary power supply provided in the embodiments of this application is embedded into the management system of the hardware computer platform.

According to a fourth aspect, this application further provides an electronic device, including a memory, a processor, and a computer program that is stored in the memory and that is capable of running on the processor. When the processor executes the computer program, the steps of the control method for automatic switching and energy output of an auxiliary power supply provided in the embodiments of this application are implemented.

According to a fifth aspect, an embodiment of this application provides a computer-readable storage medium. The computer-readable storage medium stores a computer program, and when the computer program is executed by a processor, the steps of the control method for automatic switching and energy output of an auxiliary power supply provided in the embodiments of this application are implemented.

Beneficial effects of this application are as follows: According to the control method for automatic switching and energy output of an auxiliary power supply provided in this application, the enable state of the auxiliary power supply is read; when the enable state of the auxiliary power supply is the on state, it is determined that the manual access mode or the ATS automatic control signal is the auxiliary power supply switching signal; the power output state of the primary power supply is read; and when the power output state of the primary power supply is the abnormal output state, the start/stop control instruction is executed on the auxiliary power supply by using the manual access mode or the ATS automatic control signal, so as to resolve risk problems such as system downtime, shutdown, and a plurality of error alarms that may occur when a manual operation is inconvenient or not in time, and provide a system with a capability of automatically switching between a primary power supply and an auxiliary power supply.

### BRIEF DESCRIPTION OF THE DRAWINGS

To describe the technical solutions in the embodiments of this application or in the conventional technology more clearly, the following briefly describes the accompanying drawings required for describing the embodiments or the conventional technology. Clearly, the accompanying drawings in the following description show merely some embodiments of this application, and a person of ordinary skill in the art may still derive other accompanying drawings from these accompanying drawings without creative efforts.
FIG. 1 is a flowchart of a control method for automatic switching and energy output of an auxiliary power supply according to an embodiment of this application;
FIG. 2 is a flowchart of another control method for automatic switching and energy output of an auxiliary power supply according to an embodiment of this application;
FIG. 3 is an explanatory diagram of a plurality of connection manners of a friendly hardware device platform circuit of a control method for automatic switching and energy output of an auxiliary power supply according to an embodiment of this application;
FIG. 4 is a diagram of a modular structure of a control method for automatic switching and energy output of an auxiliary power supply according to an embodiment of this application;
FIG. 5 is a flowchart of another control method for automatic switching and energy output of an auxiliary power supply according to an embodiment of this application;
FIG. 6 is a schematic diagram of a structure of a control system for automatic switching and energy output of an auxiliary power supply according to an embodiment of this application;

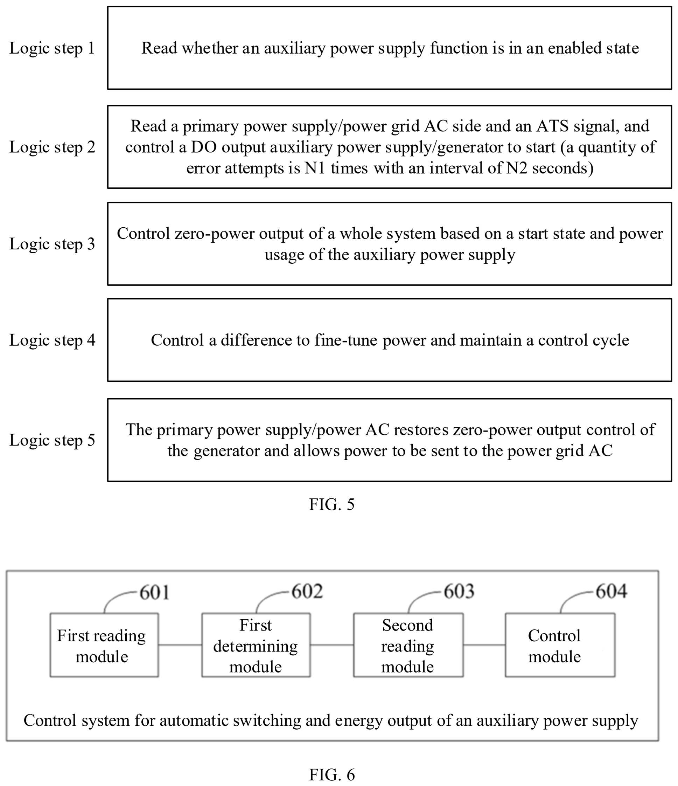

FIG. 6 is a schematic diagram of a structure of a control system for automatic switching and energy output of an auxiliary power supply according to an embodiment of this application;

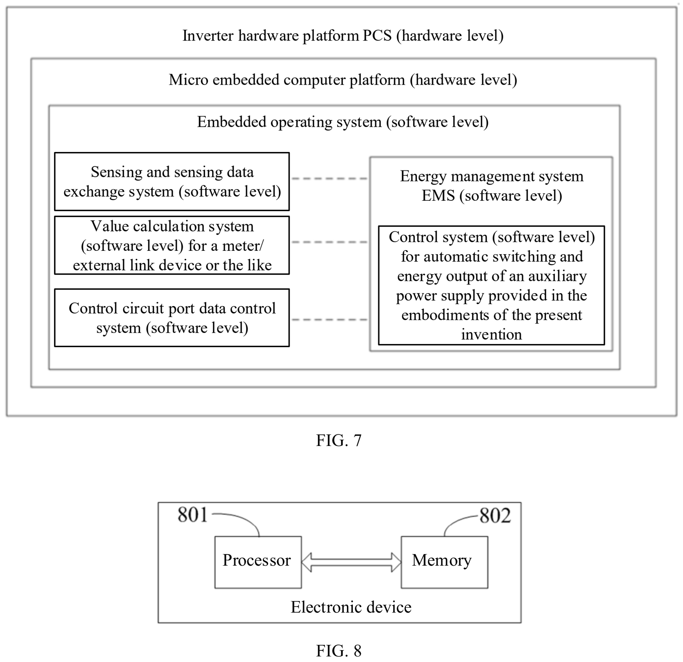

FIG. 7 is a schematic diagram of a structure of a real-time operating system for an embedded computer in a hybrid energy storage inverter according to an embodiment of this application; and
FIG. 8 is a schematic diagram of a structure of an electronic device according to an embodiment of this application.

### DETAILED DESCRIPTION OF THE EMBODIMENTS

The following clearly and completely describes the technical solutions in the embodiments of this application with reference to the accompanying drawings in the embodiments of this application. Clearly, the described embodiments are merely some rather than all of the embodiments of this application. All other embodiments obtained by a person of ordinary skill in the art based on the embodiments of this application without creative efforts shall fall within the protection scope of this application.

In this application, an enable state of an auxiliary power supply is read; when the enable state of the auxiliary power supply is an on state, it is determined that a manual access mode or an ATS automatic control signal is an auxiliary power supply switching signal; a power output state of a primary power supply is read; and when the power output state of the primary power supply is an abnormal output state, a start/stop control instruction is executed on the auxiliary power supply by using the manual access mode or the ATS automatic control signal, so as to resolve risk problems such as system downtime, shutdown, and a plurality of error alarms that may occur when a manual operation is inconvenient or not in time, and provide a system with a capability of automatically switching between a primary power supply and an auxiliary power supply.

### Embodiment 1

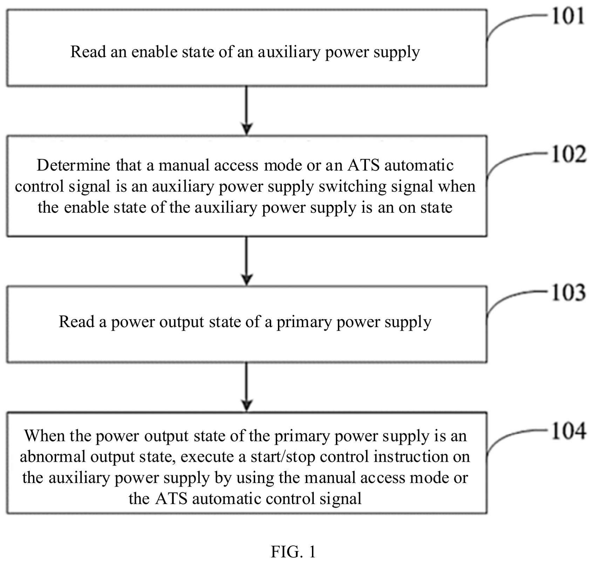

As shown in FIG. 1, FIG. 1 is a flowchart of a control method for automatic switching and energy output of an auxiliary power supply according to an embodiment of this application. The control method for automatic switching and energy output of an auxiliary power supply includes the following steps:
101: Read an enable state of an auxiliary power supply.

In this embodiment of this application, the control method for automatic switching and energy output of an auxiliary power supply is applied to a real-time operating system for an embedded computer in a hybrid energy storage inverter.

The auxiliary power supply may be understood as a backup power supply that provides power support to a primary device or a system, and the auxiliary power supply supports power supply devices having various types of energy supply capabilities, such as bidirectional and unidirectional energy supply capabilities. The auxiliary power supply may be a generator, an oil engine, a diesel generator, another type of generator, or the like.

The enable state of the auxiliary power supply includes an on state and an off state. The on state may be understood as that the auxiliary power supply is connected to a system by using a connection interface, and can start to supply power to the system at any time. The off state may be understood as that the auxiliary power supply stops working.

It should be noted that, the enable state of the auxiliary power supply is read to learn whether the auxiliary power supply is currently in a normal working state.

102: Determine that a manual access mode or an ATS automatic control signal is an auxiliary power supply switching signal when the enable state of the auxiliary power supply is the on enable state.

In this embodiment of this application, it is determined, based on the enable state of the auxiliary power supply, whether the manual access mode or the ATS automatic control signal is the auxiliary power supply switching signal.

The manual access mode may be understood as follows: A user independently connects a power supply device that has only a unidirectional energy output capability, and does not have a capability of communicating with an inverter through a digital or analog signal.

The ATS automatic control signal may be understood as a signal for controlling the auxiliary power supply, may be a device that has access to bilateral or more power supplies for automatic switching or can send a switching signal, may be an ATS, or may be a switching device such as a UPS. The ATS automatic control signal may be understood as an automatic access mode. The automatic access mode refers to a mode in which after a primary power supply loses a power supply capability, an ATS automatic switching device connected to the outside of an inverter by a user can send a signal and switch to an auxiliary power supply device mode.

It should be noted that an ATS automatic control signal device does not specifically refer to a naming manner for one or more types of devices having a capability of automatically switching between different power supplies.

Specifically, when it is detected that the auxiliary power supply is started, the manual access mode or the ATS automatic control signal is set as the auxiliary power supply switching signal, so that the auxiliary power supply is started when the primary power supply has no power output.

103: Read a power output state of the primary power supply.

In this embodiment of this application, the power output state of the primary power supply includes a normal output state and an abnormal output state. The normal output state may be understood as follows: When the primary power supply works normally, required electric energy can be stably provided to a system. The abnormal output state may be understood as follows: The primary power supply cannot work normally due to a specific reason, for example, the primary power supply is faulty or damaged, and consequently, electric energy cannot be normally provided to a system.

The primary power supply may be understood as a main power supply that provides power support for an entire device or system, and includes but is not limited to an alternating-current side, a power grid side, and the like.

Further, it may be determined, by reading the power output state of the primary power supply, whether the primary power supply works normally, to proceed with subsequent work.

104: When the power output state of the primary power supply is the abnormal output state, execute a start/stop control instruction on the auxiliary power supply by using the manual access mode or the ATS automatic control signal.

In this embodiment of this application, the abnormal output state means that the primary power supply has a fault or abnormality and cannot work normally. The start/stop control instruction may be a start instruction or a stop instruction.

In a possible embodiment, when the power output state of the primary power supply is the abnormal output state, the start instruction is executed on the auxiliary power supply by using the manual access mode or the ATS automatic control signal, to start the auxiliary power supply and enable a zero-power output function, so as to prevent a case that an auxiliary power supply device that has only a unidirectional energy output capability is impacted, causing irreversible damage. After the auxiliary power supply has a power supply capability, a mode set by a user continues to be used for energy scheduling to charge or discharge a battery.

The zero-power output function may be understood as a control method for ensuring that internal energy such as PV photovoltaic, electricity charged to or discharged by a battery, and power supplied to a load does not output power to a power grid side.

In another possible embodiment, when the power output state of the primary power supply is the abnormal output state, the start instruction is executed on the auxiliary power supply by using the manual access mode or the ATS automatic control signal, and if the auxiliary power supply is not successfully started, a signal count is started. In addition, it is determined whether the signal count is within a preset quantity of times; and if the signal count is within the preset quantity of times, the start instruction is re-executed on the auxiliary power supply by using the manual access mode or the ATS automatic control signal, to ensure that the auxiliary power supply can be started normally.

Further, if an auxiliary power supply interval delay is enabled, start of the auxiliary power supply is stopped and an error is output, and an original functional energy flow set by the user is limited to some extent.

In this embodiment of this application, after the primary power supply loses a power supply capability, a signal for starting the auxiliary power supply signal can be sent by using the manual access mode or the ATS automatic control signal, to enable an auxiliary power supply mode and enable the zero-power output function. After the auxiliary power supply has the power supply capability, the mode set by the user continues to be used for energy scheduling to charge or discharge the battery.

In this embodiment of this application, the enable state of the auxiliary power supply is read; when the enable state of the auxiliary power supply is the on state, it is determined that the manual access mode or the ATS automatic control signal is the auxiliary power supply switching signal; the power output state of the primary power supply is read; and when the power output state of the primary power supply is the abnormal output state, the start/stop control instruction is executed on the auxiliary power supply by using the manual access mode or the ATS automatic control signal. The enable state of the auxiliary power supply is read; when the enable state of the auxiliary power supply is the on state, it is determined that the manual access mode or the ATS automatic control signal is the auxiliary power supply switching signal; the power output state of the primary power supply is read; and when the power output state of the primary power supply is the abnormal output state, the start/stop control instruction is executed on the auxiliary power supply by using the manual access mode or the ATS automatic control signal, so as to resolve existing problems of unnecessary system downtime, shutdown, and a plurality of error alarms that may occur when a manual operation is inconvenient or not in time, and provide a system with a capability of automatically switching between a primary power supply and an auxiliary power supply.

Optionally, before the step of determining that a manual access mode or an ATS automatic control signal is an auxiliary power supply switching signal when the enable state of the auxiliary power supply is the on enable state, whether the manual access mode or the ATS automatic control signal is the auxiliary power supply switching signal may be further determined based on the enable state of the auxiliary power supply. If the enable state of the auxiliary power supply is the on state, it is determined that the manual access mode or the ATS automatic control signal is the auxiliary power supply switching signal.

In this embodiment of this application, the enable state of the auxiliary power supply includes the on state and the off state.

The manual access mode or the ATS automatic control signal may be understood as a signal used by an accessed inverter to control a signal for switching of the auxiliary power supply. The manual access mode may be understood as follows: A user independently connects a power supply device that has only a unidirectional energy output capability, and does not have a capability of communicating with an inverter through a digital or analog signal. The ATS automatic control signal may be an automatic access mode. The automatic access mode refers to a mode in which after a primary power supply loses a power supply capability, an ATS automatic switching device connected to the outside of an inverter by a user can send a signal and switch to an auxiliary power supply device mode. The ATS automatic control signal may be a device that has access to bilateral or more power supplies for automatic switching or can send a switching signal, may be an ATS, or may be a switching device such as a UPS. An ATS automatic control signal device does not specifically refer to a naming manner for one or more types of devices having a capability of automatically switching between different power supplies.

Further, when the enable state of the auxiliary power supply is the on state, the manual access mode or the ATS automatic control signal is set as the auxiliary power supply switching signal, so that the auxiliary power supply is started when the primary power supply has no power output.

Optionally, when the power output state of the primary power supply is the abnormal output state, before the step of performing the start/stop control instruction on the auxiliary power supply by using the manual access mode or the ATS automatic control signal, it may be further determined, based on the power output state of the primary power supply, whether the manual access mode or the ATS automatic control signal is enabled at an auxiliary power supply output start/stop control port. When the power output state of the primary power supply is the abnormal output state, it is determined that the auxiliary power supply output start/stop control port uses the manual access mode or the ATS automatic control signal as one of signals for starting the auxiliary power supply.

In this embodiment of this application, the power output state of the primary power supply includes the normal output state and the abnormal output state. The foregoing enabling the manual access mode or the ATS automatic control signal may be understood as enabling one of signals for starting the auxiliary power supply device.

It should be noted that, when the power output state of the primary power supply is abnormal, the auxiliary power supply output start/stop control port is set to enable the manual access mode or the ATS automatic control signal. In this way, it can be ensured that the auxiliary power supply can be immediately started and provide power support when the primary power supply is abnormal, to ensure normal running of a key device and system.

Optionally, if the power output state of the primary power supply is the abnormal output state, in the step of executing the start/stop control instruction on the auxiliary power supply by using the manual access mode or the ATS automatic control signal, if the power output state of the primary power supply is the abnormal output state, the start instruction may be performed on the auxiliary power supply by using the manual access mode or the ATS automatic control signal, and the auxiliary power supply receives the start instruction, enables zero-power output, and maintains output of the auxiliary power supply output start/stop control port. When power output of the primary power supply is restored to normal, the stop instruction is performed on the auxiliary power supply by using the manual access mode or the ATS automatic control signal, and the auxiliary power supply receives the stop instruction, and releases zero-power output control of a generator, where the auxiliary power supply output start/stop control port outputs a disable signal.

In this embodiment of this application, the zero-power output may be understood as a control method for ensuring that internal energy such as PV photovoltaic, electricity charged to or discharged by a battery, and power supplied to a load does not output power to a power grid side. The auxiliary power supply output start/stop control port may be understood as a port used to start or stop the auxiliary power supply, and may be referred to as DO for short.

It should be noted that, when the power output state of the primary power supply is abnormal, the auxiliary power supply receives the start instruction and enables the zero-power output, to maintain normal power supply of the DO. When the power output of the primary power supply is restored to normal, the auxiliary power supply receives the stop instruction, and releases the zero-power output control of the generator, thereby disabling signal output by the DO. This can ensure that the auxiliary power supply can provide power support when the primary power supply is abnormal, but the auxiliary power supply does not need to be used when the primary power supply works normally.

In some embodiments, if the user sets an initial device state as that an inverter is connected to the primary power supply and the primary power supply has a power supply capability, after the inverter is connected to the primary power supply and works normally, the user freely sets a working mode of the inverter. After the primary power supply loses the power supply capability, the inverter detects that power grid-side port data is abnormal, and detects the auxiliary power supply switching signal such as the manual access mode or the ATS automatic control signal, and then enables the auxiliary power supply mode and enables the zero-power output function. After the auxiliary power supply has the power supply capability, the mode set by the user continues to be used for energy scheduling to charge or discharge the battery.

In some other embodiments, if the user sets an initial device state as that an inverter is disconnected from the primary power supply, when the primary power supply does not have a power supply capability, after the inverter works normally, a working mode of the inverter freely set by the user freely is stored. When the inverter is disconnected from the primary power supply, power grid-side port data is detected, auxiliary power supply start information of the manual access mode or the ATS automatic control signal is detected, the auxiliary power supply mode is enabled, the zero-power output function is enabled, and the DO port outputs a control signal to activate the auxiliary power supply to supply power. After the auxiliary power supply has the power supply capability, the mode set by the user continues to be used to charge or discharge the battery.

The working mode includes but is not limited to a self-consumption mode, a fixed-time charging/discharging mode, and the like. The power-grid side port data includes but is not limited to a voltage, a current, power, a frequency, and the like.

Optionally, if the power output state of the primary power supply is the abnormal output state, after the step of executing the start instruction on the auxiliary power supply by using the manual access mode or the ATS automatic control signal, the auxiliary power supply may further receive the start instruction, and if the auxiliary power supply is not started, a signal count is started, and it is determined whether the signal count is within a preset quantity of times. If the signal count is within the preset quantity of times, the start instruction is re-executed on the auxiliary power supply by using the manual access mode or the ATS automatic control signal.

In this embodiment of this application, the signal count may be understood as a control signal count. The preset quantity of times may be understood as a quantity of signal counting times preset in a system, and may be a quantity of counting times such as 5, 6, 7, 8, ..., and N.

Further, when the auxiliary power supply receives the start instruction, if the auxiliary power supply is not started, the signal count is started. In addition, it is determined whether the signal count is within the preset quantity of times. If the signal count is within the preset quantity of times, the start instruction is re-executed on the auxiliary power supply by using the manual access mode or the ATS automatic control signal, to ensure that the auxiliary power supply can be started normally. In this way, a problem that the auxiliary power supply cannot be started due to some reasons can be prevented, thereby ensuring stable running of a system.

Optionally, if the signal count is within the preset quantity of times, after the step of re-executing the start instruction on the auxiliary power supply by using the manual access mode or the ATS automatic control signal, when an auxiliary power supply interval delay is enabled, start of the auxiliary power supply is stopped and an error is output.

In this embodiment of this application, the foregoing interval delay may be understood as follows: A preset time interval is placed, and the auxiliary power supply is not started in this time interval.

Further, when there is an error in enabling the auxiliary power supply interval delay, start of the auxiliary power supply is stopped and an error is output, and an original function energy flow set by the user for placing is limited to some extent.

It should be noted that, after the auxiliary power supply is started, if an interval delay is set, after preset delay time arrives, start of the auxiliary power supply is stopped, and an error prompt is output. The purpose of this is to prevent the auxiliary power supply from being frequently started in a short time, which may cause overheating of the device or other problems. Through setting of the interval delay, it can be ensured that the auxiliary power supply is started when necessary, and unnecessary start operations can be avoided.

In this embodiment of this application, an existing device can have a capability of accessing an auxiliary power supply without increasing any hardware costs or additional overheads, and the design of adding the auxiliary power supply to an energy management system greatly improves a capability of continuously supplying an energy flow to a load.

### Embodiment 2

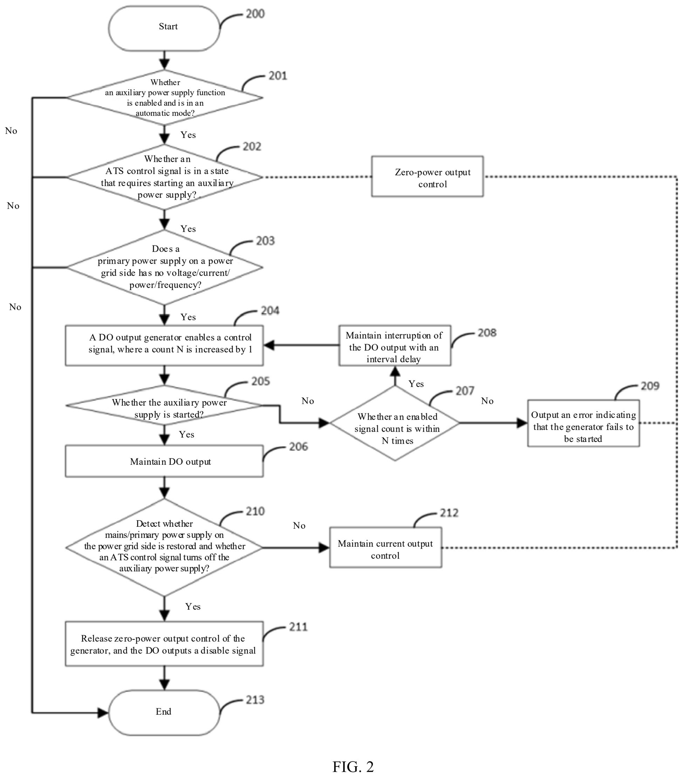

In this embodiment, FIG. 2 is a flowchart of another control method for automatic switching and energy output of an auxiliary power supply according to an embodiment of this application. The method specifically includes the following steps:
200: Start.
201: Determine whether an auxiliary power supply function is enabled and is in an automatic mode.

When the auxiliary power supply function is enabled and is in the automatic mode, proceed to step 202; otherwise, proceed to step 213.

The automatic mode means that after a primary power supply loses a power supply capability, an ATS control signal device connected to the outside of an inverter by a user can send a signal and switch to an auxiliary power supply device mode.

202: Determine whether an ATS control signal is in a state that requires starting an auxiliary power supply.

If the ATS control signal is in the state that requires starting the auxiliary power supply, proceed to step 203; otherwise, proceed to step 213.

203: Determine whether a primary power supply on a power grid side has no voltage/current/power/frequency.

If the primary power supply on the power grid side has no voltage/current/power/frequency, proceed to step 204; otherwise, proceed to step 213.

204: A DO output generator enables a control signal, where a count N is increased by 1.

The DO may be understood as an auxiliary power supply output start/stop control port. The DO output generator may be used as an example and serves as access to an auxiliary power supply device. N may be understood as a count value preset in a system, and may be 5, 6, 7, 8, or the like.

205: Whether the auxiliary power supply is started.

If the auxiliary power supply is successfully started, proceed to step 206; otherwise, proceed to step 207.

206: Maintain DO output.

The foregoing maintaining DO output may be understood as that the DO port outputs a control signal to activate the auxiliary power supply to supply power.

207: Whether an enabled signal count is within N times.

If the signal count is within the N times, proceed to step 208; otherwise, proceed to step 209. N is a digital description and is a quantity of times preset in the system, and may be a quantity of times such as 5, 6, 7, or the like.

208: Interrupt the DO output with an interval delay.

209: Output an error indicating that the generator fails to be started.

If an auxiliary power supply interval delay is enabled, start of the auxiliary power supply is stopped and an error is output.

210: Detect whether mains/primary power supply on the power grid side is restored and whether the ATS control signal turns off the auxiliary power supply.

If it is detected that the mains/primary power supply on the power grid side is restored, proceed to step 211; otherwise, proceed to step 212.

211: Release zero-power output control of the generator, and the DO outputs a disable signal.

The zero-power output may be understood as a control method for ensuring that internal energy such as PV photovoltaic, electricity charged to or discharged by a battery, and power supplied to a load does not output power to a power grid side.

212: Maintain current output control.

213: End.

In this embodiment of this application, an existing device can have a capability of accessing an auxiliary power supply without increasing any hardware costs or additional overheads, and the design of adding the auxiliary power supply to an energy management system greatly improves a capability of continuously supplying an energy flow to a load.

### Embodiment 3

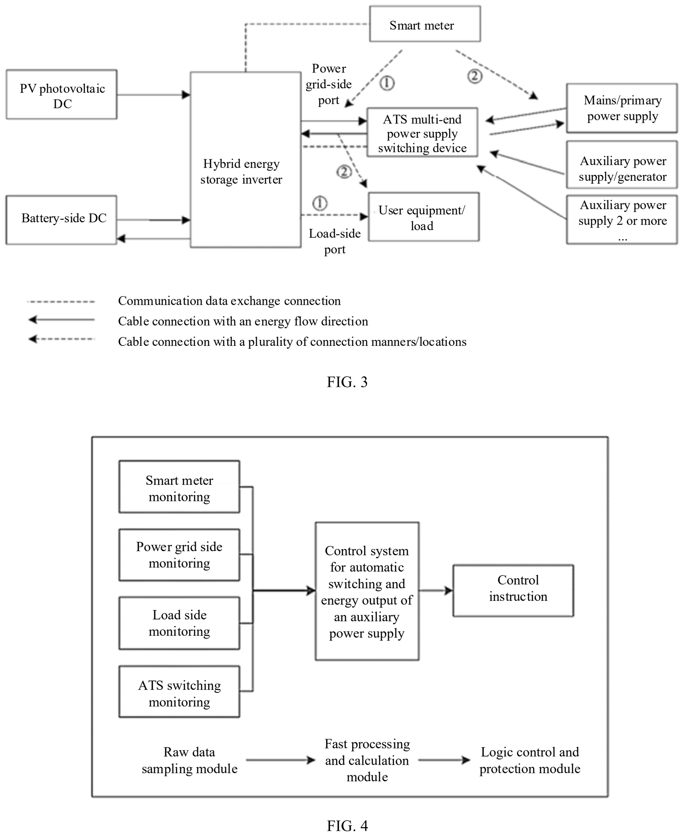

In this embodiment, FIG. 3 is an explanatory diagram of a plurality of connection manners of a friendly hardware device platform circuit of a control method for automatic switching and energy output of an auxiliary power supply according to an embodiment of this application. The friendly hardware device platform circuit specifically includes a PV photovoltaic DC, a battery-side DC, a hybrid energy storage inverter, a smart meter, an ATS multi-end power supply switching device, a power consumption device/load, mains/a primary power supply, an auxiliary power supply/generator or the like, and an auxiliary power supply 2 or more. Using an inverter of a terminal device as a core, data capabilities of all link devices are invoked.

A cable on the PV photovoltaic DC side has a capability of outputting energy unidirectionally to the inverter. The battery-side DC has a capability of inputting and outputting energy bidirectionally to the inverter. The primary power supply connected to the ATS multi-end power supply switching device has a capability of inputting and outputting energy bidirectionally to the inverter. The auxiliary power supply may be a power supply device that can only output energy unidirectionally to the inverter, or may be a power supply device that has a bidirectional capability.

Specifically, the smart meter may be connected to the inside or the outside of the ATS multi-end power supply switching device. When the meter is damaged or connected to the outside ②, in this application, power grid-side port data of the inverter is temporarily invoked. After the auxiliary power supply is restored, the auxiliary power supply tries to invoke data of the smart meter connected to a side ① or the side ② (either ① or ② may be selected or not connected, rather than both need to be connected). If no valid data is used, the power-grid side port data of the inverter port continues to be invoked to ensure a data link capability of an energy flow.

It should be noted that, ① represents a cable connection with a plurality of connection manners/locations, and ② represents being close to a power supply side rather than an inverter port side.

The power grid-side port data of the inverter includes but is not limited to a voltage, a current, power, a frequency, and the like. A power-consuming device/load may be connected to a power grid-side port of the inverter. The side ① is connected to an EPS load port of the inverter, and energy scheduling synchronously uses load port data to and the power grid-side port data of the inverter or the data of the smart meter. The side ② is directly connected to a power supply on an alternating-current side, and energy scheduling and control uses the power grid-side port data of the inverter or the data of the smart meter. Connecting to both the side ① or the side ② can obtain a timely energy response.

In this embodiment of this application, regardless of whether a connection manner is connecting to the inside or the outside of the ATS multi-end power supply switching device, and regardless of whether the auxiliary power supply is connected to the inside or outside of the smart meter, this application can identify this, thereby greatly reducing potential safety hazards caused by incorrect wiring, reducing difficulty in construction and installation, and increases a user's requirement for flexible and convenient installation.

### Embodiment 4

In this embodiment, FIG. 4 is a diagram of a modular structure of a control method for automatic switching and energy output of an auxiliary power supply according to an embodiment of this application. The modular structure includes: smart meter monitoring, power grid side monitoring, load side monitoring, ATS switching monitoring, the control method for automatic switching and energy output of an auxiliary power supply provided in this application, and a control instruction.

A raw data sampling module is configured to: read an enable state of an auxiliary power supply and a power output state of a primary power supply, and identify and monitor real-time states of the auxiliary power supply and the primary power supply.

A fast processing and calculation module is configured to perform the control method for automatic switching and energy output of an auxiliary power supply provided in this application.

A logic control and protection module is configured to invoke the control method for automatic switching and energy output of an auxiliary power supply provided in this application to implement logic control on the auxiliary power supply.

In this embodiment, a smart meter, a power grid side, a load side, and an ATS side each have a data switching capability. When a user does not have an external ATS automatic switching device, the user can still use a manual start manner to ensure that a unidirectional power supply device is properly protected from impact in an energy ring in which power supply device is connected to an inverter.

The manual start manner may be a manual mode. The manual mode means that a user independently connects a power supply device (such as a generator) that has only a unidirectional energy output capability, and does not have a capability of communicating with an inverter through a digital or analog signal.

### Embodiment 5

In this embodiment, FIG. 5 is a flowchart of another control method for automatic switching and energy output of an auxiliary power supply according to an embodiment of this application. The method specifically includes the following steps:
Logic step 1: Read whether an auxiliary power supply function is in an enabled state.
Logic step 2: Read a primary power supply/power grid AC side and an ATS signal, and control a DO output auxiliary power supply/generator to start, where a quantity of error attempts is N1 times with an interval of N2 seconds.
Logic step 3: Control zero-power output of a whole system based on a start state and power usage of the auxiliary power supply.
Logic step 4: Control a difference to fine-tune power and maintain a control cycle.
Logic step 5: The primary power supply/power AC restores zero-power output control of the generator and allows power to be sent to the power grid AC.

In this embodiment of in this application, when a user has access to an auxiliary power supply, without additional costs, a device can provide an energy scheduling mode in which the device provides access to the auxiliary power supply, and secondary power scheduling is performed based on the current mode set by the user, which does not affect the mode set by the user and does not require manual control and management, thereby ensuring stable running of a user-side device and improving user experience.

### Embodiment 6

Based on Embodiment 1, as shown in FIG. 6, an embodiment of this application provides a schematic diagram of a structure of a control system for automatic switching and energy output of an auxiliary power supply. The control system for automatic switching and energy output of an auxiliary power supply is configured to perform the control method for automatic switching and energy output of an auxiliary power supply in the embodiments of this application. The control system for automatic switching and energy output of an auxiliary power supply includes:
a first reading module 601, configured to read an enable state of an auxiliary power supply, where the enable state of the auxiliary power supply includes an on state and an off state;
a first determining module 602, configured to determine that a manual access mode or an ATS automatic control signal is an auxiliary power supply switching signal when the enable state of the auxiliary power supply is the on state;
a second reading module 603, configured to read a power output state of a primary power supply, where the power output state of the primary power supply includes a normal output state and an abnormal output state; and
a control module 604, configured to execute a start/stop control instruction on the auxiliary power supply by using the manual access mode or the ATS automatic control signal when the power output state of the primary power supply is the abnormal output state.

Optionally, the system further includes:
a second determining module, configured to determine, based on the enable state of the auxiliary power supply, whether the manual access mode or the ATS automatic control signal is the auxiliary power supply switching signal; and
a third determining module, configured to determine that the manual access mode or the ATS automatic control signal is the auxiliary power supply switching signal if the enable state of the auxiliary power supply is the on state.

Optionally, the system further includes:
a fourth determining module, configured to determine, based on the power output state of the primary power supply, whether the manual access mode or the ATS automatic control signal is enabled at an auxiliary power supply output start/stop control port; and
a fifth determining module, configured to: when the power output state of the primary power supply is the abnormal output state, determine that the auxiliary power supply output start/stop control port uses the manual access mode or the ATS automatic control signal as one of signals for starting the auxiliary power supply.

Optionally, the control module 604 includes:
a first processing submodule, configured to execute a start instruction on the auxiliary power supply by using the manual access mode or the ATS automatic control signal if the power output state of the primary power supply is the abnormal output state;
a second processing submodule, configured to receive, by the auxiliary power supply, the start instruction, enable zero-power output, and maintain output of the auxiliary power supply output start/stop control port;
a third processing submodule, configured to: when power output of the primary power supply is restored to normal, execute a stop instruction on the auxiliary power supply by using the manual access mode or the ATS automatic control signal; and
a fourth processing submodule, configured to receive, by the auxiliary power supply, the stop instruction, and release generator zero-power output control, where the auxiliary power supply output start/stop control port outputs a disable signal.

Optionally, the system further includes:
a sixth determining module, configured to receive, by the auxiliary power supply, the start instruction, and if the auxiliary power supply is not started, start a signal count, and determine whether the signal count is within a preset quantity of times; and
a first processing module, configured to re-execute the start instruction on the auxiliary power supply by using the manual access mode or the ATS automatic control signal if the signal count is within the preset quantity of times.

Optionally, the system further includes:
a second processing module, configured to: when an auxiliary power supply interval delay is enabled, stop starting the auxiliary power supply and output an error.

### Embodiment 7

Based on Embodiment 6, FIG. 7 is a schematic diagram of a structure of a real-time operating system for an embedded computer in a hybrid energy storage inverter according to an embodiment of this application. The system includes a hardware computer platform and a control system for an auxiliary power supply. The hardware computer platform is provided with an energy management system. The foregoing control system for automatic switching and energy output of an auxiliary power supply provided in this application is embedded into the management system of the hardware computer platform.

In this embodiment, this application may run in the real-time operating system for an embedded computer in a hybrid energy storage inverter. An inverter serves as the hardware computer platform, the hardware platform is provided with the energy management system (EMS), and the control system for automatic switching and energy output of an auxiliary power supply in this application is embedded into the EMS.

This application is embedded into the inverter, and a user may be provided with a plurality of power supply selections on an alternating-current side by using a later firmware software program OTA. When the user has access to an auxiliary power supply, a continuous and secure energy supply capability of an energy system that uses the inverter as a core is ensured, thereby ensuring stable running of a user-side device, improving user experience, and protecting user property.

In this application, an inherent design of a hardware circuit of an inverter is used to connect an auxiliary power supply on a power grid-side port, to achieve uninterrupted power supply detection and control of a load, so as to reduce a power failure risk of an energy system caused by a single alternating-current side power failure, improve a stable power supply capability of the inverter, and protect power supply load on a user side. In this application, an existing device can have a capability of accessing to an auxiliary power supply without increasing any hardware costs and additional overheads, to provide a user with selection of a plurality of power supply manners without requiring manual switching.

### Embodiment 8

Refer to FIG. 8. FIG. 8 is a schematic diagram of a structure of an electronic device according to an embodiment of this application. As shown in FIG. 8, the electronic device includes a memory 802, a processor 801, and a computer program of a control method for automatic switching and energy output of an auxiliary power supply that is stored in the memory 802 and that is capable of running on the processor 801.

The electronic device provided in this embodiment of this application can implement processes of the control method for automatic switching and energy output of an auxiliary power supply, and can achieve same beneficial effects. To avoid repetition, details are not described herein again.

An embodiment of this application further provides a computer-readable storage medium. The computer-readable storage medium stores a computer program, and when the computer program is executed by a processor, the processes of the control method for automatic switching and energy output of an auxiliary power supply provided in the embodiments of this application are implemented, and same technical effects can be achieved. To avoid repetition, details are not described herein again.

A person of ordinary skill in the art may understand that all or some of the procedures of the methods in the foregoing embodiments may be implemented by a computer program instructing related hardware. The computer program may be stored in a computer-readable storage medium. When the program is executed, the processes in the foregoing method embodiments may be included. The computer-readable storage medium may be a magnetic disk, an optical disc, a read-only memory (Read-Only Memory, ROM), a random access memory (Random Access Memory, RAM for short), or the like.

The foregoing disclosures are merely preferred embodiments of this application, and certainly are not intended to limit the scope of claims of this application. Therefore, equivalent changes made according to the claims of this application shall fall within the scope of this application.

## Claims

1. A control method for automatic switching and energy output of an auxiliary power supply, **characterized in that** the method comprises:
reading an enable state of an auxiliary power supply, wherein the enable state of the auxiliary power supply comprises an on state and an off state;
determining that a manual access mode or an ATS automatic control signal is an auxiliary power supply switching signal when the enable state of the auxiliary power supply is the on state;
reading a power output state of a primary power supply, wherein the power output state of the primary power supply comprises a normal output state and an abnormal output state; and
executing a start/stop control instruction on the auxiliary power supply by using the manual access mode or the ATS automatic control signal when the power output state of the primary power supply is the abnormal output state.

2. The control method for automatic switching and energy output of an auxiliary power supply according to claim 1, **characterized in that** before the step of determining that a manual access mode or an ATS automatic control signal is an auxiliary power supply switching signal when the enable state of the auxiliary power supply is the on state, the method further comprises:
determining, based on the enable state of the auxiliary power supply, whether the manual access mode or the ATS automatic control signal is the auxiliary power supply switching signal; and
determining that the manual access mode or the ATS automatic control signal is the auxiliary power supply switching signal if the enable state of the auxiliary power supply is the on state.

3. The control method for automatic switching and energy output of an auxiliary power supply according to claim 2, **characterized in that** before the step of executing a start/stop control instruction on the auxiliary power supply by using the manual access mode or the ATS automatic control signal when the power output state of the primary power supply is the abnormal output state, the method further comprises:
determining, based on the power output state of the primary power supply, whether the manual access mode or the ATS automatic control signal is enabled at an auxiliary power supply output start/stop control port; and
when the power output state of the primary power supply is the abnormal output state, determining that the auxiliary power supply output start/stop control port uses the manual access mode or the ATS automatic control signal as one of signals for starting the auxiliary power supply.

4. The control method for automatic switching and energy output of an auxiliary power supply according to claim 3, **characterized in that** the step of executing a start/stop control instruction on the auxiliary power supply by using the manual access mode or the ATS automatic control signal when the power output state of the primary power supply is the abnormal output state comprises:
executing a start instruction on the auxiliary power supply by using the manual access mode or the ATS control signal if the power output state of the primary power supply is the abnormal output state;
receiving, by the auxiliary power supply, the start instruction, enabling zero-power output, and maintaining output of the auxiliary power supply output start/stop control port;
when power output of the primary power supply is restored to normal, executing a stop instruction on the auxiliary power supply by using the manual access mode or the ATS automatic control signal; and
receiving, by the auxiliary power supply, the stop instruction, and releasing zero-power output control of a generator, wherein the auxiliary power supply output start/stop control port outputs a disable signal.

5. The control method for automatic switching and energy output of an auxiliary power supply according to claim 4, **characterized in that** after the step of executing a start instruction on the auxiliary power supply by using the manual access mode or the ATS automatic control signal if the power output state of the primary power supply is the abnormal output state, the method further comprises:
receiving, by the auxiliary power supply, the start instruction, and if the auxiliary power supply is not started, starting a signal count, and determining whether the signal count is within a preset quantity of times; and
re-executing the start instruction on the auxiliary power supply by using the manual access mode or the ATS automatic control signal if the signal count is within the preset quantity of times.

6. The control method for automatic switching and energy output of an auxiliary power supply according to claim 5, **characterized in that** after the step of re-executing the start instruction on the auxiliary power supply by using the manual access mode or the ATS automatic control signal if the signal count is within the preset quantity of times, the method further comprises:
when an auxiliary power supply interval delay is enabled, stopping starting the auxiliary power supply and outputting an error.

7. A control system for automatic switching and energy output of an auxiliary power supply, **characterized in that** the control system for automatic switching and energy output of an auxiliary power supply is configured to perform the control method for automatic switching and energy output of an auxiliary power supply according to any one of claims 1 to 6.

8. A real-time operating system for an embedded computer in a hybrid energy storage inverter, **characterized in that** the system comprises a hardware computer platform and a control system for an auxiliary power supply, the hardware computer platform is provided with an energy management system, and the control system for automatic switching and energy output of an auxiliary power supply according to claim 7 is embedded into the management system of the hardware computer platform.

9. An electronic device, **characterized by** comprising a memory, a processor, and a computer program that is stored in the memory and that is capable of running on the processor, wherein when the processor executes the computer program, the steps of the control method for automatic switching and energy output of an auxiliary power supply according to any one of claims 1 to 6 are implemented.

10. A computer-readable storage medium, **characterized in that** the computer-readable storage medium stores a computer program, and when the computer program is executed by a processor, the steps of the control method for automatic switching and energy output of an auxiliary power supply according to any one of claims 1 to 6 are implemented.
